# EUROPÄISCHE PATENTSCHRIFT

(11) **EP 1 799 790 B1**
(45) Veröffentlichungstag und Bekanntmachung des Hinweises auf die Patenterteilung: **12.08.2009**
(21) Anmeldenummer: 05792095.1
(22) Anmeldetag: 28.09.2005
(51) Int. Cl.: C09K 8/00

(54) **KORROSIONS- UND GASHYDRATINHIBITOREN MIT ERHÖHTER BIOLOGISCHER ABBAUBARKEIT UND VERMINDERTER TOXIZITÄT**
CORROSION AND GAS HYDRATE INHIBITORS WITH AN INCREASED BIOLOGICAL DEGRADABILITY AND A REDUCED TOXICITY
INHIBITEURS D'HYDRATE DE GAZ ET DE CORROSION A BIODEGRADABILITE ELEVEE ET A TOXICITE REDUITE

(30) Priorität: 07.10.2004 DE 102004048778
(43) Veröffentlichungstag der Anmeldung: 27.06.2007
(73) Patentinhaber: Clariant Produkte (Deutschland) GmbH, D-65843 Sulzbach (DE)
(72) Erfinder: LEINWEBER, Dirk, 65824 Schwalbach (DE); FEUSTEL, Michael, 55278 Köngernheim (DE)
(74) Vertreter: Mikulecky, Klaus
(86) Internationale Anmeldenummer: PCT/EP2005/010503
(87) Internationale Veröffentlichungsnummer: WO 2006/040013

(56) Entgegenhaltungen:
- EP-A- 0 446 616
- EP-A- 1 450 003
- EP-A- 1 450 004
- US-A1- 2004 164 278

## Beschreibung

Die vorliegende Erfindung betrifft ein Verfahren zur Korrosionsinhibierung und Gashydratinhibierung an und in Einrichtungen zur Förderung und Transport von Kohlenwasserstoffen in der Erdölförderung und -verarbeitung.

In technischen Prozessen, bei denen Metalle mit Wasser oder auch mit Öl-Wasser-Zweiphasensystemen in Kontakt kommen, besteht die Gefahr der Korrosion. Die ist besonders ausgeprägt, wenn die wässrige Phase wie bei Erdölgewinnungs- und Verarbeitungsprozessen stark salzhaltig oder durch gelöste Sauergase, wie Kohlendioxid bzw. Schwefelwasserstoff, azid ist. Daher ist die Ausbeutung einer Lagerstätte und die Verarbeitung von Erdöl ohne spezielle Additive zum Schutz der eingesetzten Ausrüstungen nicht möglich.

Geeignete Korrosionsschutzmittel für die Erdölförderung und -verarbeitung sind zwar schon seit langem bekannt, jedoch aus Gründen des Umweltschutzes für Offshore-Anwendungen zukünftig inakzeptabel.

Als typische Korrosionsinhibitoren des Standes der Technik besitzen Amide, Amidoamine bzw. Imidazoline von Fettsäuren und Polyaminen eine äußerst gute Öllöslichkeit und sind somit in der korrosiven Wasserphase aufgrund schlechter Verteilungsgleichgewichte (Partitioning) nur in geringer Konzentration vorhanden. Demgemäß müssen diese Produkte trotz ihrer schlechten biologischen Abbaubarkeit in hoher Dosierung eingesetzt werden.

Quartäre Alkylammoniumverbindungen (Quats) stellen alternative Korrosionsschutzmittel des Standes der Technik dar, die neben den korrosionsinhibierenden auch biostatische Eigenschaften besitzen können. Trotz einer verbesserten Wasserlöslichkeit zeigen die Quats, zum Beispiel im Vergleich zu den Imidazolinen, eine deutlich reduzierte Filmpersistenz und führen daher ebenfalls nur in höherer Dosierung zu einem effektiven Korrosionsschutz. Die starke Algentoxizität und die mäßige biologische Abbaubarkeit beschränken den Einsatz von Quats immer mehr auf ökologisch unsensible Anwendungsgebiete.

Gashydrate sind kristalline Einschlussverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst ist thermodynamisch instabil und wird erst durch die Einbindung von Gastmolekülen stabilisiert. Diese eisähnlichen Verbindungen können in Abhängigkeit von Druck und Gaszusammensetzung auch über den Gefrierpunkt von Wasser (bis über 25°C) hinaus existieren.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Erdgasförderung stellt die Existenz dieser Gashydrate ein großes Problem dar, besonders dann, wenn Nassgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zur Blockierung verschiedenster Fördereinrichtungen, wie Pipelines, Ventilen oder Produktionseinrichtungen, in denen über längere Strecken bei niedrigeren Temperaturen Nassgas oder Mehrphasengemische transportiert werden, wie dies speziell in kälteren Regionen der Erde oder auf dem Meeresboden vorkommt.

Außerdem kann die Gashydratbildung auch beim Bohrvorgang zur Erschließung neuer Gas- oder Erdöllagerstätten bei entsprechenden Druck- und Temperaturverhältnissen zu Problemen führen, indem sich in den Bohrspülflüssigkeiten Gashydrate bilden.

Um solche Probleme zu vermeiden, kann die Gashydratbildung in Gaspipelines, beim Transport von Mehrphasengemischen oder in Bohrspülflüssigkeiten durch Einsatz von größeren Mengen (mehr als 10 Gew.-% bezüglich des Gewichts der : Wasserphase) niederen Alkoholen, wie Methanol, Glykol, oder Diethylenglykol unterdrückt werden. Der Zusatz dieser Additive bewirkt, dass die thermodynamische Grenze der Gashydratbildung zu niedrigeren Temperaturen und höheren Drücken hin verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der Offshore-Förderung, verursacht.

Heute versucht man deshalb, thermodynamische Inhibitoren zu ersetzen, indem man bei Temperatur- und Druckbereichen, in denen sich Gashydrate bilden können, Additive in Mengen < 2 % zusetzt, die die Gashydratbildung entweder zeitlich hinauszögern (kinetische Inhibitoren) oder die Gashydratagglomerate klein und damit pumpbar halten, so dass diese durch die Pipeline transportiert werden können (sog. Agglomerat-Inhibitoren oder Anti-Agglomerates). Die dabei eingesetzten Inhibitoren behindern entweder die Keimbildung und/oder das Wachstum der Gashydratpartikel, oder modifizieren das Hydratwachstum derart, dass kleinere Hydratpartikel resultieren.

Als Gashydratinhibitoren wurden in der Patentliteratur neben den bekannten thermodynamischen Inhibitoren eine Vielzahl monomerer als auch polymerer Substanzklassen beschrieben, die kinetische Inhibitoren oder Agglomeratinhibitoren darstellen. Von besonderer Bedeutung sind hierbei Polymere mit Kohlenstoff-Backbone, die in den Seitengruppen sowohl cyclische (Pyrrolidon- oder Caprolactamreste) als auch acyclische Amidstrukturen enthalten.

DE-A-103 07 728 offenbart quartäre Alkylalkoxyaminoalkylester und quartäre Alkylaminoalkylamide von Alkenylbernsteinsäuren als Korrosionsinhibitoren und Gashydratinhibitoren.

DE-A-103 07 727 offenbart quartäre Alkylaminoalkylester und quartäre Alkylalkoxyaminoalkylamide von Alkenylbernsteinsäuren als Korrosionsinhibitoren und Gashydratinhibitoren.

Nachteilig an diesen Verbindungen ist jedoch, dass ihre biologische Abbaubarkeit immer noch nicht ausreichend ist.

Aufgabe der vorliegenden Erfindung war es, neue Korrosionsinhibitoren zu finden, die bei konstant gutem oder verbessertem Korrosionsschutz neben einer guten Wasserlöslichkeit, einer schnellen Filmbildung und somit guten Filmpersistenz auch eine verbesserte biologische Abbaubarkeit im Vergleich zu den Korrosionsinhibitoren des Standes der Technik bieten. Weiterhin soll die Toxizität der Verbindungen reduziert werden, indem Quat-Strukturen (quartäre Ammonium-Kationen) vermieden werden.

Aufgabe der vorliegenden Erfindung war es ferner, verbesserte Additive zu finden, die sowohl die Bildung von Gashydraten verlangsamen (kinetische Inhibitoren) als auch Gashydratagglomerate klein und pumpbar halten (Anti-Agglomerates), um so ein breites Anwendungsspektrum mit hohem Wirkpotential zu gewährleisten. Des Weiteren sollten die derzeit verwendeten thermodynamischen Inhibitoren (Methanol und Glykole), die beträchtliche Sicherheitsprobleme und Logistikprobleme verursachen, ersetzt werden können.

Gashydratinhibitoren des Standes der Technik werden gewöhnlich mit Korrosionsinhibitoren co-additiviert, um Korrosion der Transport- und Fördereinrichtungen vorzubeugen. Aufgrund der häufig nicht unmittelbar gegebenen Verträglichkeit von Gashydratinhibitor und Korrosionsschutzmittel bei der Formulierung ergibt sich daraus für den Anwender ein zusätzlicher Aufwand. Ein wesentlicher Vorteil gegenüber dem Stand der Technik bestände, wenn eine Co-Additivierung mit Korrosionsinhibitoren nicht mehr zwingend erforderlich ist.

Es wurde nun überraschenderweise gefunden, dass Alkylamino-alkyl/alkoxyester bzw. Alkylamino-alkyl/alkoxyamide, gegebenenfalls enthaltend Alkylaminoalkyl/alkoxyimide, von Alkenylbernsteinsäuren ohne quartäre Ammonium-Strukturelemente eine ausgezeichnete Wirkung als Korrosionsinhibitoren und Gashydratinhibitoren aufweisen, sowie eine gute biologische Abbaubarkeit und verminderte Toxizität zeigen.

Gegenstand der Erfindung ist somit die Verwendung von Verbindungen der Formel (1) 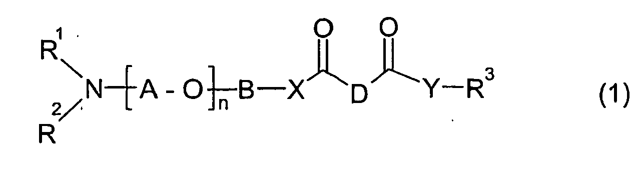 worin
- R¹, R²: unabhängig voneinander C₁- bis C₂₂-Alkyl, C₂- bis C₂₂-Alkenyl, C₆- bis C₃₀-Aryl- oder C₇- bis C₃₀-Alkylaryl, und,
- R³: M, Wasserstoff oder einen gegebenenfalls Heteroatome enthaltenden organischen Rest mit 1 bis 100 Kohlenstoffatomen,
- A: eine C₂- bis C₄-Alkylengruppe,
- B: eine gegebenenfalls substituierte C₁- bis C₁₀-Alkylengruppe,
- D: eine mit einem organischen Rest mit 1 bis 600 Kohlenstoffatomen substituierte Ethylengruppe,
- X, Y: unabhängig voneinander O oder NR⁴,
- R⁴: unabhängig voneinander Wasserstoff, C₁- bis C₂₂-Alkyl, C₂- bis C₂₂-Alkenyl, C₆- bis C₃₀-Aryl- oder C₇- bis C₃₀-Alkylaryl, und
- M: ein Kation
- n: eine Zahl von 0 bis 30
bedeuten, als Korrosions- und Gashydratinhibitoren.

Ein weiterer Gegenstand der Erfindung ist ein Verfahren zur Inhibierung von Korrosion an Metalloberflächen, insbesondere von eisenhaltigen Metallen, indem einem korrosiven System, welches mit den Metalloberflächen in Kontakt steht, mindestens eine Verbindung der Formel (1) zugesetzt wird.

Ein weiterer Gegenstand der Erfindung ist ein Verfahren zur Inhibierung von Gashydraten, indem einem zur Bildung von Gashydraten neigenden System aus Wasser und Kohlenwasserstoffen mindestens eine Verbindung der Formel (1) zugesetzt wird.

Korrosive Systeme im Sinne dieser Erfindung sind bevorzugt flüssig/flüssig- bzw. flüssig/gasförmig-Mehrphasensysteme, bestehend aus Wasser und Kohlenwasserstoffen, die in freier und/oder gelöster Form korrosive Bestandteile, wie Salze und Säuren, enthalten. Die korrosiven Bestandteile können auch gasförmig sein, wie etwa Schwefelwasserstoff und Kohlendioxid.

Kohlenwasserstoffe im Sinne dieser Erfindung sind organische Verbindungen, die Bestandteile des Erdöls/Erdgases sind, und deren Folgeprodukte. Kohlenwasserstoffe im Sinne dieser Erfindung sind auch leichtflüchtige Kohlenwasserstoffe, wie beispielsweise Methan, Ethan, Propan, Butan. Für die Zwecke dieser Erfindung zählen dazu auch die weiteren gasförmigen Bestandteile des Erdöls/Erdgases, wie etwa Schwefelwasserstoff und Kohlendioxid.

A kann geradkettig oder verzweigt sein und steht vorzugsweise für eine Ethylen-, Propylen-, oder Butylengruppe, insbesondere eine Ethylen- oder Propylengruppe. Bei den durch (A-O)ₙ bezeichneten Alkoxygruppen kann es sich auch um gemischte Alkoxygruppen handeln.

B kann geradkettig oder verzweigt sein und steht vorzugsweise für eine C₂- bis C₄-Alkylengruppe, insbesondere für eine Ethylen- oder Propylengruppe. B kann gegebenenfalls mit funktionellen Gruppen substituiert sein, vorzugsweise mit einer oder mehreren OH-Gruppen.

R¹ und R² stehen vorzugsweise unabhängig voneinander für eine Alkyl- oder Alkenylgruppe von 2 bis 14 Kohlenstoffatomen, insbesondere für solche Gruppen mit 3 bis 8 Kohlenstoffatomen und speziell für Butyl-Gruppen.

R⁴ steht vorzugsweise für Wasserstoff.

R³ kann ein beliebiger organischer Rest sein, der 1 bis 100 C-Atome enthält, und der gegebenenfalls Heteroatome enthalten kann. Enthält R⁴ Heteroatome, so handelt es sich vorzugsweise um Stickstoff- oder Sauerstoffatome oder beides, vorzugsweise um beides.

R³ steht vorzugsweise für einen Rest der Formel (2) 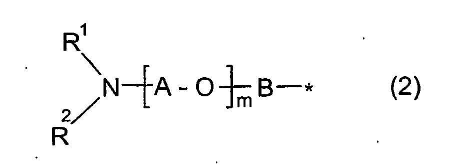 worin R¹, R², A und B die bereits oben angegebenen Bedeutungen mit den jeweils oben für R¹, R², A und B.angegebenen Vorzugsbereichen haben.
m steht unabhängig von n für eine Zahl zwischen 0 und 30, vorzugsweise zwischen 1 und 10, und besonders bevorzugt zwischen 2 und 6.

In einer weiteren bevorzugten Ausführungsform umfasst R³ Wasserstoff, der sowohl kovalent gebunden als auch dissoziiert vorliegen kann.

D bildet mit den Carbonylgruppen, an die es gebunden ist, ein substituiertes Bernsteinsäurederivat. D stellt daher eine Struktureinheit der Formel 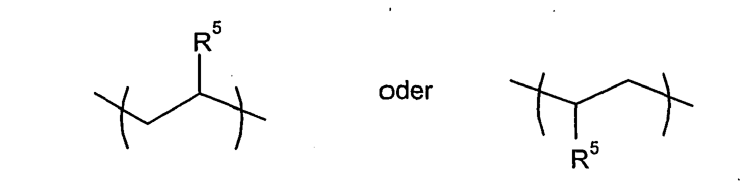 dar, in der R⁵ für einen beliebigen, gegebenenfalls Heteroatome enthaltenden organischen Rest mit 1 bis 600 Kohlenstoffatome, insbesondere für C₂- bis C₁₀₀-Alkyl- oder Alkenylreste steht. Die Alkenylreste R⁵ können von C₂- bis C₈-Alkenen durch Oligomerisierung abgeleitet sein, insbesondere aus Ethylen, Propylen oder Butylen.

Enthält R⁵ Heteroatome, so handelt es sich vorzugsweise um Stickstoff- oder Sauerstoffatome oder beides, vorzugsweise um beides.

Vorzugsweise enthält R⁵ Struktureinheiten der Formel (3) 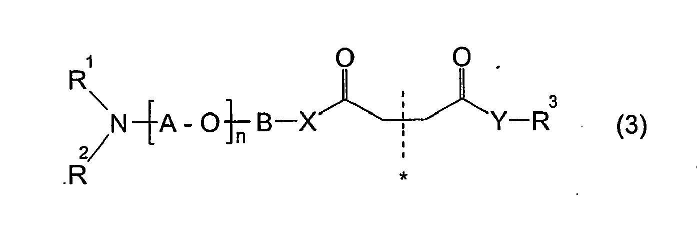 worin R¹, R², R³, B, X und Y die bereits oben angegebenen Bedeutungen mit den jeweils oben für R¹, R², R³, B, X und Y angegebenen Vorzugsbereichen haben. Die unterbrochene Linie bedeutet, dass die Struktureinheiten gemäß Formel (3) sowohl in 2- als auch in 3-Position der Dicarbonyl-Gruppe über eine Valenz eines Alkyl- bzw. Alkenylrests an beliebiger Stelle von R⁵ gebunden sein können.

M steht für ein ein- oder mehrwertiges Kation, vorzugsweise Metallion, besonders bevorzugt Alkali- oder Erdalkalimetallionen.

In einer weiteren bevorzugten Ausführungsform steht M für ein Ammoniumion der Formel N⁺HR⁶R⁷R⁸, worin R⁶, R⁷ und R⁸ unabhängig voneinander Wasserstoff oder einen beliebigen organischen Rest, der 1 bis 100 C-Atome enthält, und der gegebenenfalls Heteroatome enthalten kann, bedeuten. Enthalten R⁶, R⁷ und/oder R⁸ Heteroatome, so handelt es sich vorzugsweise um Stickstoff oder Sauerstoffatome oder beides, vorzugsweise um beides. In einer besonders bevorzugten Ausführungsform stehen einer, zwei oder alle Reste R⁶, R⁷ und R⁸ für -CH₂-CH₂-OH, und die verbleibenden Reste für H. Diese Kationen M sind folglich von Mono-, Di- oder Triethanolamin durch Protonierung abgeleitet.

Die erfindungsgemäßen Verbindungen können alleine oder in Kombination mit anderen bekannten Korrosionsinhibitoren und/oder Gashydratinhibitoren eingesetzt werden. Im Allgemeinen wird man soviel des erfindungsgemäßen Korrosionsinhibitors und/oder Gashydratinhibitors einsetzen, dass man unter denn gegebenen Bedingungen einen ausreichenden Korrosionsschutz und Schutz vor Gashydratbildung erhält.

Bevorzugte Einsatzkonzentrationen der Korrosionsinhibitoren bezogen auf die reinen erfindungsgemäßen Verbindungen sind 5 bis 5000 ppm, bevorzugt 10 bis 1000, insbesondere 15 bis 150 ppm.

Die Gashydratinhibitoren werden im Allgemeinen in Mengen zwischen 0,01 und 5 Gew.-% der reinen erfindungsgemäßen Verbindungen bezogen auf die wässrige Phase, vorzugsweise zwischen 0,05 und 2 Gew.-% verwendet.

Besonders geeignet als Korrosionsinhibitoren und/oder Gashydratinhibitoren sind auch Mischungen der erfindungsgemäßen Produkte mit anderen Korrosionsinhibitoren und/oder Gashydratinhibitoren des Standes der Technik.

Besonders geeignet als Korrosionsinhibitoren und somit eine bevorzugte Ausführungsform dieser Erfindung sind Mischungen der Verbindungen gemäß Formel (1) bis (3), wie mit Amidaminen und/oder lmidazolinen aus Fettsäuren und Polyaminen und deren Salzen, quartären Ammoniumsalzen, oxethylierten/ oxpropylierten Aminen, Amphoglycinaten und -propionaten, Betainen oder Verbindungen beschrieben in DE-A-199 30 683..

Besonders geeignet als Gashydratinhibitoren und somit eine bevorzugte Ausführungsform dieser Erfindung sind Mischungen der Verbindungen gemäß Formel (1) bis (3) mit einem oder mehreren Polymeren mit einem durch Polymerisation erhaltenen Kohlenstoff-Backbone und Amidbindungen in den Seitenketten. Hierzu zählen besonders Homopolymere und/oder Copolymere des Vinylpyrrolidons, Vinylcaprolactams, iso-Propylacrylamids, Acryloylpyrrolidins, N-Methyl-N-Vinylacetamid sowie weiterer anionischer, kationischer und neutraler Comonomere mit vinylischer Doppelbindung.

Werden Mischungen verwendet, so betragen die Konzentrationsverhältnisse zwischen den erfindungsgemäßen Gashydratinhibitoren und den zugemischten Komponenten von 90:10 bis 10:90 Gewichtsprozente, vorzugsweise werden Mischungen in den Verhältnissen 75:25 bis 25:75, und insbesondere von 60:40 bis 40:60 verwendet.

Die erfindungsgemäßen Verbindungen können dadurch hergestellt werden, dass man alkoxylierte Alkylamine, Alkylaminoalkylenamine oder auch Alkylaminoalkyletheramine mit Dicarbonsäurederivaten zu den entsprechenden Mono- oder Dicarbonsäureestern bzw. Mono- oder Dicarbonsäureamiden, gegebenenfalls zu zyklischen Dicarbonsäureimiden, gemäß den Umsetzungsverhältnissen umsetzt.

Die Herstellung von alkoxylierten Alkylaminen, Alkylaminoalkylenaminen oder auch Alkylaminoalkyletheraminen ist im Stand der Technik beschrieben.

Basis der verwendeten alkoxylierten Alkylamine sind Dialkylamine mit C₁- bis C₂₂-Alkylresten oder C₂- bis C₂₂-Alkenylresten, bevorzugt C₃- bis C₈-Dialkylamine. Geeignete Dialkylamine sind beispielsweise Di-n-butylamin, Düsobutylamin, Dipentylamin, Dihexylamin, Dioctylamin, Dicyclopentylamin, Dicyclohexylamin, Diphenylamin, Dibenzylamin.

Die Alkylamine werden im Allgemeinen mit Ethylenoxid, Propylenoxid, Butylenoxid oder Mischungen verschiedener solcher Alkylenoxide umgesetzt, wobei Ethylenoxid oder Mischungen aus Ethylenoxid und Propylenoxid bevorzugt sind. Bezogen auf die Alkylamine werden 1-30 Mol Alkylenoxid beaufschlagt, bevorzugt 1-10 Mol, besonders bevorzugt 2-6 Mol.

Die Alkoxylierung erfolgt in Substanz, kann aber auch in Lösung durchgeführt werden. Geeignete Lösemittel für die Alkoxylierung sind inerte Ether wie Dioxan, Tetrahydrofuran, Glyme, Diglyme und MPEGs.

Im Allgemeinen wird die Alkoxylierung im ersten Reaktionsschritt unkatalysiert bis auf > 95 Gew.-% tert.-Stickstoff durchgeführt. Höheralkoxylierung erfolgt nach Zugabe basischer Verbindungen als Katalysatoren. Als basische Verbindungen könnten Erdalkali-/Alkalimetallhydroxide oder-alkoholate (Natriummethylat, Natriumethylat, Kalium-tert.-butylat) verwendet werden, bevorzugt sind aber Alkalimetallhydroxide, besonders Natriumhydroxid oder Kaliumhydroxid.

Basis der verwendeten Alkylaminoalkylenamine sind im Wesentlichen Dialkylamino-alkylenamine mit C₁- bis C₂₂-Alkylresten oder C₂- bis C₂₂-Alkenylresten, bevorzugt tertiäre C₁- bis C₈-Dialkylamino-alkylenamine. Besonders geeignet sind beispielsweise N,N-Dibutylaminopropylamin, N,N-Diethylaminopropylamin, N,N-Dimethylaminopropylamin, N,N-Dimethylaminobutylamin, N,N-Dimethylaminohexylamin, N,N-Dimethylaminodecylamin, N,N-Dibutylaminoethylamin und N,N-Dimethylamino-2-hydroxypropylamin.

Basis der verwendeten Dicarbonsäurederivate sind freie Dicarbonsäuren, Dicarbonsäurediester, Dicarbonsäureanhydride und Dicarbonsäurehalogenide, bevorzugt Diester und Anhydride. Besonders geeignet sind Anhydride, beispielsweise Maleinsäureanhydrid, Bernsteinsäureanhydrid, Phthalsäureanhydrid und Alkenylbersteinsäureanhydride.

Die Herstellung von Alkenylbernsteinsäureanhydriden durch thermische oder katalysierte "En"-Reaktion ist im Stand der Technik beschrieben. Dabei werden Olefine, bevorzugt Olefine mit terminaler Doppelbindung, mit Maleinsäureanhydrid unter erhöhten Temperaturen umgesetzt. In Abhängigkeit von der Reaktionsführung, von der Art des verwendeten Olefins und vom verwendeten Molverhältnis werden Mono- und/oder Bisaddukte, gegebenenfalls Polyaddukte erhalten.

Die Dicarbonsäurederivate werden im Allgemeinen mit den alkoxylierten Alkylaminen bzw. Alkylaminoalkylenaminen bei 60 - 240°C, bevorzugt bei 120 - 200°C derart umgesetzt, dass gegebenenfalls in Abhängigkeit vom verwendeten Dicarbonsäurederivat unter Eliminierung von Reaktionswasser oder von Alkohol eine vollständige Kondensation zum entsprechenden Mono- oder Dicarbonsäureestern bzw. Mono- oder Dicarbonsäureamiden, gegebenenfalls zu zyklischen Dicarbonsäureimiden, erfolgt. Der Umsetzungsgrad kann durch die Bestimmung der Säurezahl, Verseifungszahl und/oder durch die Bestimmung des Basen- und/oder Amidstickstoffs verfolgt werden.

Die Umsetzung erfolgt in Substanz, kann aber auch bevorzugt in Lösung durchgeführt werden. Insbesondere bei der Verwendung von Carbonsäuren ist die Verwendung von Lösemitteln erforderlich, wenn hohe Umsätze und niedrigere Säurezahlen von den resultierenden Umsetzungsprodukten angestrebt werden. Geeignete Lösemittel für die Herstellung sind organische Verbindungen, durch die das Reaktionswasser azeotrop entfernt wird. Insbesondere können aromatische Lösemittel oder Lösemittelgemische, oder Alkohole verwendet werden. Besonders bevorzugt ist 2-Ethylhexanol. Die Reaktionsführung erfolgt dann beim Siedepunkt des Azeotrops.
Bei der Herstellung von Dicarbonsäure-diamiden werden bevorzugt Dicarbonsäure-diester und ein Überschuss des entsprechenden Amins verwendet, der mit dem frei werdenden Alkohol oder im Anschluss an die Umsetzung destillativ entfernt werden kann. Bei Verwendung von Dicarbonsäureanhydriden wird bevorzugt iterativ mit einem geeigneten Alkohol vollständig verestert und dann amidiert. Geeignete Alkohole sind z.B. Ethanol, Propanol, iso-Propanol oder 2-Ethylhexanol. Besonders bevorzugt ist 2-Ethylhexanol.

Gemäß dem Stand der Technik können die Veresterungen bzw. Amidierungen durch Zugabe geeigneter saurer Katalysatoren mit einem pKₐ-Wert von kleiner gleich 5, wie z.B. Mineralsäuren oder Sulfonsäuren, beschleunigt werden. Besonders bevorzugt sind Alkylstannansäuren.

### Beispiele

**Die verwendeten Abkürzungen haben folgende Bedeutung:**

| | |
|---|---|
| VZ = | Verseifungszahl |
| SZ = | Säurezahl |
| OHZ = | OH-Zahl |
| bas.-N = | basischer Stickstoff |

### a) Allgemeine Vorschrift für die Herstellung der Alkylamino-alkyl/alkoxymonoester aus Dicarbonsäureanhydriden

In einer Rührapparatur mit Rückflusskühler werden 1 mol des entsprechenden Anhydrids (gemäß Verseifungszahl) unter Stickstoffspülung vorgelegt und auf 60°.C erwärmt. Dann werden 1 mol des entsprechenden alkoxylierten Alkylendiamins (gemäß OH-Zahl oder Bas.-N) über 0,5 Stunde zugetropft, wobei sich die Reaktionsmischung auf ca. 70°C erwärmt. Die Reaktionsmischung wird 5 Stunden bei 60°C nachgerührt.

### Beispiel 1 (Tetrapropylenbernsteinsäure-N,N-dibutylamino-N-ethylester)

Aus 87,8 g Tetrapropylenbernsteinsäureanhydrid (VZ = 383,3 mg KOH/g) und 52,0 g Dibutylaminethanol (DBAE; OHZ = 323,8 mg KOH/g) wurden 139 g Tetrapropylenbernsteinsäure-N,N-dibutylamino-N-ethylester mit SZ = 133,4 mg KOH/g und bas.-N = 2,93 % erhalten.

### Beispiel 2 (Pentapropylenbernsteinsäure-N,N-dibutylamino-N-ethylester)

Aus 117,4 g Pentapropylenbernsteinsäureanhydrid (VZ = 286,7 mg KOH/g) und 52,0 g Dibutylaminethanol (DBAE; OHZ = 323,8 mg KOH/g) wurden 169 g Pentapropylenbernsteinsäure-N,N-dibutylamino-N-ethylester mit SZ = 118,7 mg KOH/g und bas.-N = 2,45 % erhalten.

### Beispiel 3 (Polyisobutenylbernsteinsäure-N,N-dibutylamino-N-ethylester)

Aus 130,5 g Polyisobutenylbernsteinsäureanhydrid (auf Basis PIB 550; VZ = 257,9 mg KOH/g) und 52,0 g Dibutylaminethanol (DBAE; OHZ = 323,8 mg KOH/g) wurden 182 g Polyisobutenylbernsteinsäure-N,N-dibutylamino-N-ethylester mit SZ = 106,1 mg KOH/g und bas.-N = 2,27 % erhalten.

### Beispiel 4 (Dodecenyl-/Tetradecenylbernsteinsäure-N,N-dibutylamino-N-tri(ethoxy)ethylester)

Aus 84,2 g Dodecenyl-/Tetradecenylbernsteinsäureanhydrid (VZ = 399,9 mg KOH/g) und 72,9 g Dibutylamin + 3,7 EO (OHZ = 230,9 mg KOH/g) wurden ca. 155 g Dodecenyl-/Tetradecenylbernsteinsäure-N,N-dibutyl-amino-N-tri(ethoxy)ethylester mit SZ = 106,6 mg KOH/g und bas.-N = 2,24 % erhalten.

### Beispiel 5 (Tripropylenbernsteinsäure-N,N-dibutylamino-N-tri(ethoxy)ethylester)

Aus 74,1 g Tripropylenbernsteinsäureanhydrid (VZ = 454,5 mg KOH/g) und 72,9 g Dibutylamin + 3,7 EO (OHZ = 230,9_ mg KOH/g) wurden ca. 145 g Tripropylenbernsteinsäure-N,N-dibutylamino-N-tri(ethoxy)ethylester mit SZ = 123,7 mg KOH/g und bas.-N = 2,39 % erhalten.

### Beispiel 6 (Tetrapropylenbernsteinsäure-N,N-dibutylamino-N-tri(ethoxy)ethylester)

Aus 87,8 g Tetrapropylenbernsteinsäureanhydrid (VZ = 383,3 mg KOH/g) und 72,9 g Dibutylamin + 3,7 EO (OHZ = 230,9 mg KOH/g) wurden ca. 160 g Tetrapropylenbernsteinsäure-N,N-dibutylamino-N-tri(ethoxy)ethylester mit SZ = 115,6 mg KOH/g und bas.-N = 2,18 % erhalten.

### Beispiel 7 (Pentapropylenbernsteinsäure-N,N-dibutylamino-N-tri(ethoxy)ethylester)

Aus 102,8 g Pentapropylenbernsteinsäureanhydrid (VZ = 327,6 mg KOH/g) und 72,9 g Dibutylamin + 3,7 EO (OHZ = 230,9 mg KOH/g) wurden ca. 175 g Pentapropylenbernsteinsäure-N,N-dibutylamino-N-tri(ethoxy)ethylester mit SZ = 100,5 mg KOH/g und bas.-N = 2,00 % erhalten.

### Beispiel 8 (Polyisobutenylbernsteinsäure-N,N-dibutylamino-N-tri(ethoxy)ethylester)

Aus 130,5 g Polyisobutenylbernsteinsäureanhydrid (auf Basis PIB 550; VZ = 257,9 mg KOH/g) und 72,9 g Dibutylamin+3,7EO (OHZ = 230,9 mg KOH/g) wurden ca. 200 g Polyisobutenylbernsteinsäure-N,N-dibutylamino-N-tri(ethoxy)ethylester mit SZ = 90,8 mg KOH/g und bas.-N = 1,74 % erhalten.

### b) Allgemeine Vorschrift für die Umsetzung von Alkenylbernsteinsäurealkyl/alkoxymonoestern mit Alkanolaminen

In einer Rührapparatur werden 1 mol (nach bas.-N) des entsprechenden Alkenylbernsteinsäurealkyl/alkoxymonoesters unter Stickstoffspülung vorgelegt und auf 60°C erwärmt. Dazu werden 1 mol Alkanolamin so zugetropft, dass die Reaktionstemperatur 80 bis 90°C nicht übersteigt. Die Reaktionsmischung wird anschließend 3 Stunden bei 80°C nachgerührt.

### Beispiel 9 (Tetrapropylenbernsteinsäure-N,N-dibutylamino-N-ethylester-monoethanolamin-Salz)

Aus 139 g Tetrapropylenbernsteinsäure-N,N-dibutylamino-N-ethylester und 20,1 g Monoethanolamin wurden 159,1 g Tetrapropylenbernsteinsäure-N,N-dibutylamino-N-ethylester-monoethanolamin-Salz mit SZ = 115,2 mg KOH/g und bas.-N = 5,76% erhalten.

### Beispiel 10 (Tetrapropylenbernsteinsäure-N,N-dibutylamino-N-ethylester-diethanolamin-Salz)

Aus 139 g Tetrapropylenbernsteinsäure-N,N-dibutylamino-N-ethylester und 34,7 g Diethanolamin wurden 173,7 g Tetrapropylenbernsteinsäure-N,N-dibutylamino-N-ethylester-diethanolamin-Salz mit SZ = 106,2 mg KOH/g und bas.-N = 5,58% erhalten.

### Beispiel 11 (Tetrapropylenbernsteinsäure-N,N-dibutylamino-N-ethylester-triethanolamin-Satz)

Aus 139 g Tetrapropylenbernsteinsäure-N,N-dibutylamino-N-ethylester und 49,2 g Triethanolamin wurden 188,2 g Tetrapropylenbernsteinsäure-N,N-dibutylamino-N-ethylester-triethanolamin-Salz mit SZ = 98,3 mg KOH/g und bas.-N = 5,34% erhalten.

### Beispiel12 (Tetrapropylenbernsteinsäure-N,N-dibutylamino-N-ethylester-alkanolamin-Salz)

Aus 139 g Tetrapropylenbernsteinsäure-N,N-dibutylamino-N-ethylester und einer Mischung aus 6,7 g Monoethanolamin, 11,6 g Diethanolamin und 16,4 g Triethanolamin wurden 173,7 g Tetrapropylenbernsteinsäure-N,N-dibutylamino-N-ethylester-alkanolamin-Salz mit SZ = 106,1 mg KOH/g und bas.-N = 5,54% erhalten.

### Beispiel 13 (Dodecenyl-/Tetradecenylbernsteinsäure-N,N-dibutylamino-N-tri(ethoxy)ethylester-triethanolamin-Salz)

Aus 155 g Dodecenyl-/Tetradecenylbernsteinsäure-N,N-dibutylamino-N-tri(ethoxy)ethylester und 37 g Triethanolamin wurden ca. 192 g Dodecenyl-/ Tetradecenylbernsteinsäure-N,N-dibutyl-amino-N-tri(ethoxy)ethylester-triethanolamin-Salz mit SZ = 84,8 mg KOH/g und bas.-N = 4,03 % erhalten.

### Beispiel 14 (Tripropylenbernsteinsäure-N,N-dibutylamino-N-tri(ethoxy)ethylester-triethanolamin-Salz)

Aus 145 g Tripropylenbernsteinsäure-N,N-dibutylamino-N-tri(ethoxy)ethylester und 37 g Triethanolamin wurden ca. 182 g Tripropylenbernsteinsäure-N,N-dibutylamino-N-tri(ethoxy)ethylester-triethanolamin-Salz mit SZ = 99,7 mg KOH/g und bas.-N = 4,19 % erhalten.

### Beispiel15 (Tetrapropylenbernsteinsäure-N,N-dibutylamino-N-tri(ethoxy)ethylester-triethanolamin-Salz)

Aus 160 g Tetrapropylenbernsteinsäure-N,N-dibutylamino-N-tri(ethoxy)ethylester und 37 g Triethanolamin wurden 197 g Tetrapropylenbernsteinsäure-N,N-dibutylamino-N-tri(ethoxy)ethylester-triethanolamin-Salz mit SZ = 93,9 mg KOH/g und bas.-N = 3,98 % erhalten.

### Beispiel16 (Pentapropylenbernsteinsäure-N,N-dibutylamino-N-tri(ethoxy)ethylester-triethanolamin-Salz)

Aus 175 g Pentapropylenbernsteinsäure-N,N-dibutylamino-N-tri(ethoxy)ethylester und 37 g Triethanolamin wurden ca. 212 g Pentapropylenbernsteinsäure-N,N-dibutylamino-N-tri(ethoxy)ethylester-triethanolamin-Salz mit SZ = 83,2 mg KOH/g und bas.-N = 3,79 % erhalten.

### Beispiel 17 (Polyisobutenylbernsteinsäure-N,N-dibutylamino-N-tri(ethoxy)ethylester-triethanolamin-Salz)

Aus 200 g Polyisobutenylbernsteinsäure-N,N-dibutylamino-N-tri(ethoxy)ethylester und 37 g Triethanolamin wurden ca. 237 g Polyisobutenylbernsteinsäure-N,N-dibutylamino-N-tri(ethoxy)ethylester-triethanolamin-Salz mit SZ = 76,3 mg KOH/g und bas.-N = 3,13 % erhalten.

Wirksamkeit der erfindungsgemäßen Verbindungen als Korrosionsinhibitoren

Die erfindungsgemäßen Verbindungen wurden als Korrosionsinhibitoren im Shell-Wheel-Test geprüft. Coupons aus C-Stahl (DIN 1.1203 mit 15 cm² Oberfläche) wurden in eine Salzwasser/Petroleum-Mischung (9:1,5 %ige NaCl- Lösung mit Essigsäure auf pH 3,5 gestellt) eingetaucht und bei einer Umlaufgeschwindigkeit von 40 rpm bei 70°C 24 Stunden diesem Medium ausgesetzt. Die Dosierung des Inhibitors betrug 50 ppm einer 40 % Lösung des Inhibitors. Die Schutzwerte wurden aus der Massenabnahme der Coupons, bezogen auf einen Blindwert, berechnet.

In den folgenden Tabellen bezeichnet "Vergleich 1" ein handelsübliches Rückstandsamin - Quat auf Basis Dicocosalkyl-dimethylammoniumchlorid und "Vergleich 2" ein handelsübliches Sojafettsäureamidopropyl-N,N-dimethylammonium-carboxymethyl-betain beschrieben durch EP-B-0 446 616 (Korrosionsinhibitoren des Standes der Technik).

**Tabelle 1: (SHELL-Wheel-Test)**

| Beispiel | Korrosionsinhibitor | ø Schutz % |
|---|---|---|
| Vergleich 1 | Standard-Quat | 36,0 |
| Vergleich 2 | Standard-Betain | 75,4 |
| 18 | Verbindung aus Beispiel 2 | 79,3 |
| 19 | Verbindung aus Beispiel 4 | 78,4 |
| 20 | Verbindung aus Beispiel 7 | 81,3 |
| 21 | Verbindung aus Beispiel 11 | 88,7 |
| 22 | Verbindung aus Beispiel 13 | 89,3 |
| 23 | Verbindung aus Beispiel 16 | 88,5 |

Die Produkte wurden außerdem im LPR-Test (Testbedingungen analog ASTM D 2776) geprüft.

**Tabelle 2: (LPR-Test)**

| Beispiel | Korrosionsinhibitor | Schutz nach [%] | | |
|---|---|---|---|---|
| | | 10 min | 30 min | 60 min |
| Vergleich 1 | Standard-Quat | 53,9 | 61,2 | 73,7 |
| Vergleich 2 | Standard-Betain | 45,9 | 59,2 | 64,3 |
| 18 | Verbindung aus Beispiel 2 | 50,3 | 65,7 | 79,3 |
| 19 | Verbindung aus Beispiel 4 | 52,4 | 66,8 | 78,8 |
| 20 | Verbindung aus-Beispiel 7 | 55,8 | 70,1 | 83,5 |
| 21 | Verbindung aus Beispiel 11 | 77,1 | 89,0 | 96,8 |
| 22 | Verbindung aus Beispiel 13 | 78,3 | 88,1 | 94,2 |
| 23 | Verbindung aus Beispiel 16 | 80,5 | 91,2 | 97,6 |

Wie aus den obigen Testresultaten zu erkennen ist, weisen die erfindungsgemäßen Produkte sehr gute Korrosionsschutzeigenschaften bei niedriger Dosierung auf und übertreffen im Wesentlichen die Wirksamkeit der Inhibitoren des Standes der Technik.

**Tabelle 3: Biologische Abbaubarkeit (OECD 306)**

| Beispiel | Korrosionsinhibitor | Biologische Abbaubarkeit [%] |
|---|---|---|
| Vergleich 3 | Verbindung aus Beispiel 4, quaterniert | 18,6 |
| Vergleich 4 | Verbindung aus Beispiel 7, quaterniert | 16,7 |
| 24 | Verbindung aus Beispiel 13 | 81,5 |
| 25 | Verbindung aus Beispiel 16 | 85,4 |

Wie aus Tabelle 3 klar ersichtlich ist, zeigen die nicht quaternierten Verbindungen eine bessere biologische Abbaubarkeit als die vergleichbaren quaternierten Verbindungen, was in der Abwesenheit des toxischen "Quat-Strukturelements" begründet liegt.

## Patentansprüche

1. Verwendung von Verbindungen der Formel (1) 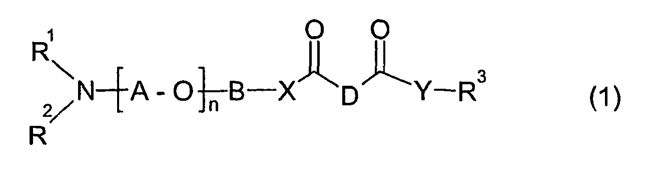 worin
R¹, R² unabhängig voneinander C₁- bis C₂₂-Alkyl, C₂- bis C₂₂-Alkenyl, C₆- bis C₃₀-Aryl- oder C₇- bis C₃₀-Alkylaryl, und,
R³ M, Wasserstoff oder einen gegebenenfalls Heteroatome enthaltenden organischen Rest mit 1 bis 100 Kohlenstoffatomen,
A eine C₂- bis C₄ Alkylengruppe,
B eine gegebenenfalls substituierte C₁- bis C₁₀-Alkylengruppe,
D eine mit einem organischen Rest mit 1 bis 600 Kohlenstoffatomen substituierte Ethylengruppe,
X, Y unabhängig voneinander O oder NR⁴,
R⁴ unabhängig voneinander Wasserstoff, C₁- bis C₂₂-Alkyl, C₂- bis C₂₂-Alkenyl, C₆- bis C₃₀-Aryl- oder C₇- bis C₃₀-Alkylaryl, und
M ein Kation
n eine Zahl von 0 bis 30
bedeuten, als Korrosions- und Gashydratinhibitoren.

2. Verwendung nach Anspruch 1 und/oder 2, wobei A für eine Ethylen-, Propylen- oder Butylengruppe steht.

3. Verwendung nach Anspruch 1 und/oder 2, wobei B für eine C₂- bis C₄-Alkylengruppe steht und gegebenenfalls mit funktionellen Gruppen substituiert ist, vorzugsweise mit einer oder mehreren OH-Gruppen.

4. Verwendung nach einem oder mehreren der Ansprüche 1 bis 3, wobei R¹ und R² unabhängig voneinander für eine Alkyl- oder Alkenylgruppe von 2 bis 14 Kohlenstoffatomen stehen.

5. Verwendung nach einem oder mehreren der Ansprüche 1 bis 4, wobei R⁴ für Wasserstoff steht.

6. Verwendung' nach einem oder mehreren der Ansprüche 1 bis 5, wobei n für eine Zahl zwischen 1 und 10 steht.

7. Verwendung nach einem oder mehreren der Ansprüche 1 bis 6, wobei R³ für einen Rest der Formel (2) steht 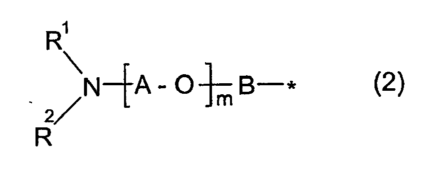 worin R¹, R², A und B die in Anspruch 1 angegebenen Bedeutungen haben und m unabhängig von n für eine Zahl von 0 bis 30 steht.

8. Verwendung nach einem oder mehreren der Ansprüche 1 bis 7, wobei D für eine Struktureinheit der Formen 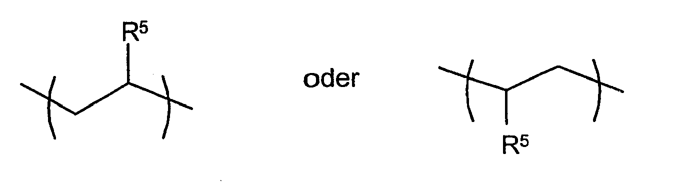 steht, in der R⁵ für C₂- bis C₁₀₀-Alkyl- oder Alkenylreste steht.

9. Verwendung nach einem oder mehreren der Ansprüche 1 bis 8, wobei D von substituierten Bernsteinsäurederivaten mit 10 bis 100 Kohlenstoffatomen abgeleitet ist.

10. Verwendung nach einem oder mehreren der Ansprüche 1 bis 9, worin R³ = M ist und M für ein Ammoniumion der Formel N⁺HR⁶R⁷R⁸ steht, und wobei einer, zwei oder alle Reste R⁶, R⁷ und R⁸ für -CH₂-CH₂-OH und die verbleibenden Reste für H stehen.

11. Verwendung nach einem oder mehreren der Ansprüche 8 bis 10, wobei R⁵ für Struktureinheiten der Formel (3) steht 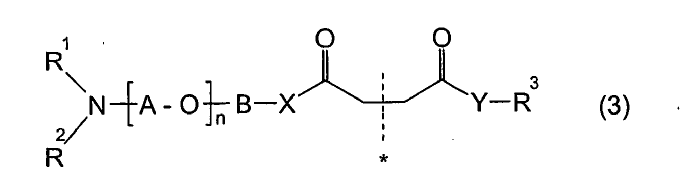 worin R¹, R², R³, A, B, X, Y und n die in Anspruch 1 angegebenen Bedeutungen haben.

## Claims

1. The use of compounds of the formula (1) 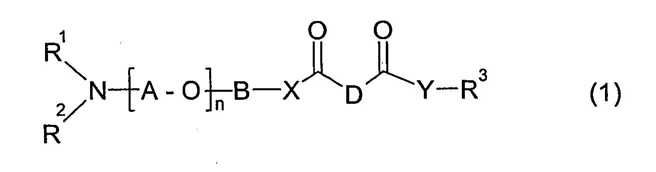 in which
R¹, R² are each independently C₁- to C₂₂-alkyl, C₂- to C₂₂-alkenyl, C₆- to C₃₀-aryl or C₇- to C₃₀-alkylaryl, and
R³ is M, hydrogen or an organic radical which may contain heteroatoms and has from 1 to 100 carbon atoms,
A is a C₂- to C₄-alkylene group,
B is an optionally substituted C₁- to C₁₀-alkylene group,
D is an methylene group substituted by an organic radical having from 1 to 600 carbon atoms,
X, Y are each independently O or NR⁴,
R⁴ are each independently hydrogen, C₁- to C₂₂-alkyl, C₂- to C₂₂-alkenyl, C₆- to C₃₀-aryl or C₇- to C₃₀-alkylaryl, and
M is a cation,
n is from 0 to 30
as corrosion and gas hydrate inhibitors.

2. The use as claimed in claim 1 and/or 2, where A is an ethylene, propylene or butylene group.

3. The use as claimed in claim 1 and/or 2, where B is a C₂- to C₄-alkylene group and is optionally substituted by functional groups, preferably by one or more OH groups.

4. The use as claimed in one or more of claims 1 to 3, where R¹ and R² are each independently an alkyl or alkenyl group of from 2 to 14 carbon atoms.

5. The use as claimed in one or more of claims 1 to 4, where R⁴ is hydrogen.

6. The use as claimed in one or more of claims 1 to 5, where n is from 1 to 10.

7. The use as claimed in one or more of claims 1 to 6, where R³ is a radical of the formula (2) 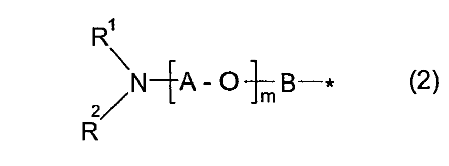 in which R¹, R², A and B are each as defined in claim 1 and m, independently of n, is from 0 to 30.

8. The use as claimed in one or more of claims 1 to 7, where D is a structural unit of the formula 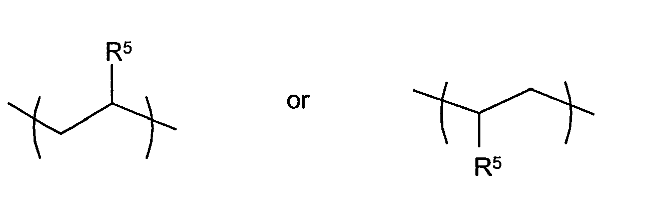 in which R⁵ is C₂- to C₁₀₀-alkyl or -alkenyl radicals.

9. The use as claimed in one or more of claims 1 to 8, where D is derived from substituted succinic acid derivatives having from 10 to 100 carbon atoms.

10. The use as claimed in one or more of claims 1 to 9, in which R³ =M and M is an ammonium ion of the formula N⁺HR⁶R⁷R⁸, and where one, two or all R⁶, R⁷ and R³ radicals are -CH₂-CH₂-OH and the remaining radicals are each H.

11. The use as claimed in one or more of claims 8 to 10, where R⁵ represents structural units of the formula (3) 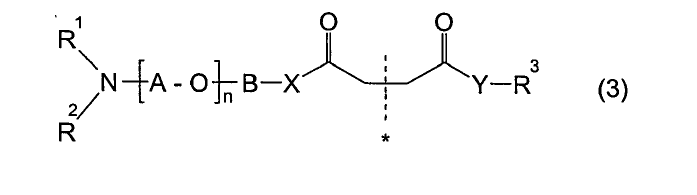 in which R¹, R², R³, A, B, X, Y and n are each as defined in claim 1.

## Revendications

1. Utilisation de composés de formule (1) 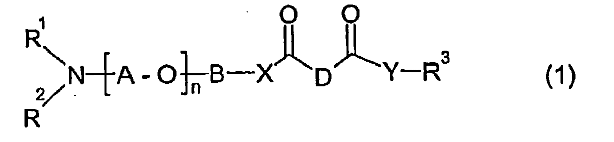 où
R¹, R² signifient, indépendamment l'un de l'autre, C₁-C₂₂-alkyle, C₂-C₂₂-alcényle, C₆-C₃₀-aryle ou C₇-C₃₀-alkylaryle, et,
R³ signifie M, hydrogène ou un radical organique contenant le cas échéant des hétéroatomes, comprenant 1 à 100 atomes de carbone,
A signifie un groupe C₂-C₄-alkylène,
B signifie un groupe C₁-C₁₀-alkylène le cas échéant substitué,
D signifie un groupe éthylène substitué par un radical organique comprenant 1 à 600 atomes de carbone,
X, Y signifient, indépendamment l'un de l'autre, O ou N_{R4} ,
R⁴ signifie, indépendamment l'un de l'autre, hydrogène, C₁-C₂₂-alkyle, C₂-C₂₂-alcényle, C₆-C₃₀-aryle ou C₇-C₃₀-alkylaryle, et
M signifie un cation
n signifie un nombre de 0 à 30,
comme inhibiteurs de corrosion et d'hydrates de gaz.

2. Utilisation selon la revendication 1 et/ou 2, où A représente un groupe éthylène, propylène ou butylène.

3. Utilisation selon la revendication 1 et/ou 2, où B représente un groupe C₂-C₄-alkylène et est le cas échéant substitué par des groupes fonctionnels, de préférence par un ou plusieurs groupes OH.

4. Utilisation selon l'une ou plusieurs des revendications 1 à 3, où R¹ et R² représentent, indépendamment l'un de l'autre, un groupe alkyle ou alcényle comprenant 2 à 14 atomes de carbone.

5. Utilisation selon l'une ou plusieurs des revendications 1 à 4, où R⁴ représente hydrogène.

6. Utilisation selon l'une ou plusieurs des revendications 1 à 5, où n représente un nombre entre 1 et 10.

7. Utilisation selon l'une ou plusieurs des revendications 1 à 6, où R³ représente un radical de formule (2) 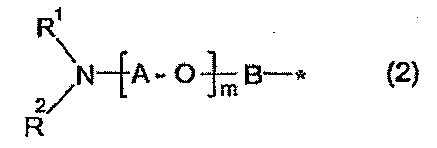 où R¹, R² , A et B ont les significations indiquées dans la revendication 1 et m représente, indépendamment de n, un nombre de 0 à 30.

8. Utilisation selon l'une ou plusieurs des revendications 1 à 7, où D représente une unité de structure de formule 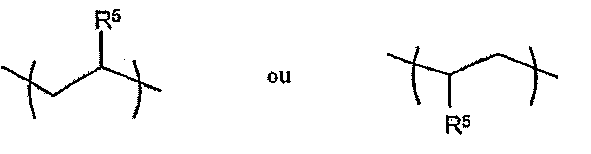 où R⁵ représente des radicaux C₂-C₁₀₀-alkyle ou alcényle.

9. Utilisation selon l'une ou plusieurs des revendications 1 à 8, où D est dérivé de dérivés substitués de l'acide succinique comprenant 10 à 100 atomes de carbone.

10. Utilisation selon l'une ou plusieurs des revendications 1 à 9, où R³ = M et M représente un ion d'ammonium de formule N⁺HR⁶R⁷R⁸, et où un, deux ou tous les radicaux R⁶, R⁷ et R⁸ représentent -CH₂-CH₂-OH et les autres radicaux représentent H.

11. Utilisation selon l'une ou plusieurs des revendications 8 à 10, où R⁵ représente des unités de structure de formule (3) 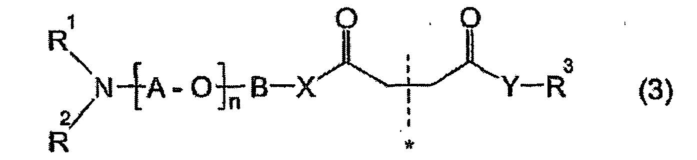 dans laquelle R¹, R², R³, A, B, X, Y et n ont les significations indiquées dans la revendication 1.
